# EUROPEAN PATENT SPECIFICATION

(11) **EP 1 519 690 B1**
(45) Date of publication and mention of the grant of the patent: **05.11.2008**
(21) Application number: 03711091.3
(22) Date of filing: 19.02.2003
(51) Int. Cl.: A61C 1/14, C10M 103/02, C10M 103/06

(54) **COATED DENTAL HANDPIECE**
BESCHICHTETES ZAHNÄRTZLICHES HANDSTÜCK
EMBOUT A MAIN DENTAIRE A REVETEMENT

(30) Priority: 25.02.2002 US 359501 P; 18.02.2003 US 369974
(43) Date of publication of application: 06.04.2005
(73) Proprietor: DENTSPLY INTERNATIONAL, INC., York, PA 17405-0872 (US)
(72) Inventor: HEIL, Donald, J., Lake Villa, IL 60046 (US)
(74) Representative: Hartz, Nikolai
(86) International application number: PCT/US2003/004751
(87) International publication number: WO 2003/071973

(56) References cited:
- EP-A- 1 201 340
- DE-A- 3 402 635
- US-A- 2 703 768
- PATENT ABSTRACTS OF JAPAN vol. 2003, no. 03, 5 May 2003 (2003-05-05) & JP 2002 339082 A (NIPPON DENKO KK), 27 November 2002 (2002-11-27) & WPI / DERWENT abstract 2003-189013[19]

## Description

### TECHNICAL FIELD

The present invention is directed toward dental handpieces. More particularly, the invention is directed toward a dental handpiece having improved metal-to-metal contacts. The handpiece has metal-to-metal contacts that are improved with an anti-friction and/or anti-corrosion coating.

### BACKGROUND OF THE INVENTION

Dental handpieces of the air-driven type are known to have an outer housing which often includes a neck portion. Within the chamber of the housing is a rotor adapted to be driven by air supplied through the handle and neck. The housing often includes upper and lower openings are axially aligned with a rotor being supported for rotation by upper and lower bearing assemblies. The rotor often includes a bur tube that extends substantially between the openings and has a central bore axially aligned with those openings. The lower end of the bore conventionally receives a gripping chuck that is often fixed to the bur tube. Such a dental handpiece is disclosed for example, in U.S. Pat. No. 4,089,115.

The chucks commonly used in high speed dental handpieces for releasably holding dental burs in place have chucking actions that can be generally categorized as falling within one of two groups. The first group includes wrench-operated chucks in which wrenches are utilized either to exert pushing or pulling forces to tighten such chucks. The second group includes spring grip chucks in which the bur-retaining force is generated by the spring action of the ***chuck*** and in which a wrench or some other means is utilized to open the jaws when bur removal or insertion is desired. For example, German Patent DE 34 02 635 discloses a dental handpiece having a chuck with spring jaws that exert a gripping force on a dental bur. The jaws may be shifted into bur-releasing positions by depression of a push button at the upper end of the handpiece head. When the button is depressed, a wedge element is urged between the jaws to spread them apart and release the bur. It is also conventional to exert the shifting force by a lever rather than a button.

It has been found that in dental handpieces, the chuck must securely hold a dental instrument, such as a bur or other cutting tool, with high accuracy (for example, within 2.54 x 10⁻⁶ m (0.0001 inches)) while rotating at very high speeds (from 200,000 to 450,000 rpm or higher). Preferably, the chuck must be easy to open and close without tools to remove and install burs. The chuck must perform this function after repeated cycles of use and sterilization. It is also important that the chuck continue to grip the dental tool even when it is not fully seated into the handpiece.

As stated above, in a conventional handpiece design, a user presses a button or lever, which transmits force through a pusher to a wedge in the chuck assembly. A tapered from portion on the wedge enters into a tapered slot in the chuck and spreads the jaws as the push button is depressed, allowing insertion of the dental tool or bur, into the chuck. When the button is released, the jaws close, clamping the bur and pushing the wedge upward. Such a handpiece is commercially available for example, as the TRADITION-PB and the XGT handpieces from DENTSPLY International Inc.

The contact between the wedge and the jaw slot is a sliding contact between two similar metals and is therefore, subject to high friction. Friction can increase as either part wears or corrodes. Also, friction increases the required force on the button or lever to actuate the device, which is uncomfortable to the user, and potentially dangerous by increasing the likelihood of slipping or the like. The wedge may even become stuck in the chuck jaws, rendering the chuck useless.

A need exists therefore, for an improved handpiece that has increased resistance to friction, wear and/or corrosion.

### SUMMARY OF THE INVENTION

It is therefore, an object of the invention to provide a dental handpiece.

It is another object of the invention to provide a dental handpiece improved with respect to its metal-to-metal contacts.

These and other objects of the invention that will become apparent from the following discussion, are accomplished by the invention as hereinafter described and claimed.

These and other objects of the invention, which will become apparent from the present disclosure, are carried out by the invention as hereinafter described.

A dental handpiece of the type having chucking mechanism to releasably hold a dental tool, the chuck mechanism having as components, a pusher, a wedge and a set of jaws, wherein the improvement comprises coating at least one of the chuck mechanism components with a coating that provides both anti-friction and anti-corrosion properties in the presence of moisture; wherein said coating contains an amorphous component selected from the group consisting of graphite, chromium-nitrate and mixtures thereof.

### BRIEF DESCRIPTION OF THE DRAWING

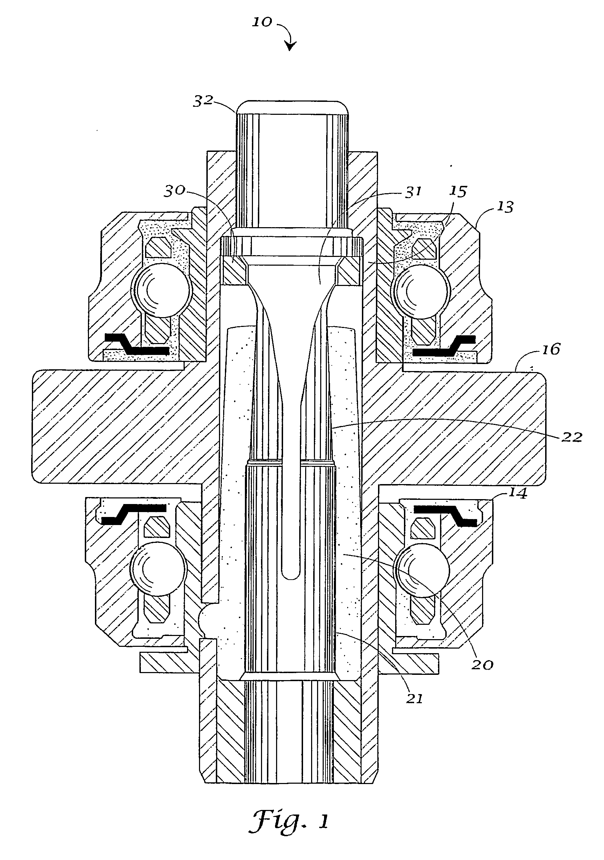

FIGURE 1 is a side elevational view of the working head portion of a dental handpiece, having a chuck mechanism according to the present invention.

### PREFERRED EMBODIMENTS FOR CARRYING OUT THE INVENTION

The present invention has application to any dental handpiece where it is advantageous to provide for increased anti-friction and anti-corrosion properties. Such properties are especially advantageous in dental handpieces that are subjected to repeated use and sterilization under harsh conditions of high heat and moisture. The present invention may therefore, find application in any handpiece driven by electric motor, pressurized air or the like.

The handpiece selected for illustration is an air-driven handpiece 10 having a pair of ball bearing assemblies 13 and 14 supporting rotor 15 for rotation. The rotor 15 includes any conventional driving means such as for example, an air-turbine16 for rotatably driving rotor 15. The turbine depicted in FIGURE 1 is a radial-flow turbine that is driven by air, but of course, can be of any conventional design.

Handpiece 10 is provided with a chuck 20 having a first open end 21 which can receive a dental tool (not shown) in a conventional manner. Chuck 20 has internally tapered jaws 22 that are employed to hold the dental tool in use. A wedge 30 having a tapered surface 31 is provided and is movable to enter the jaws 22 to spread them in order to receive or remove the tool. A pusher 32 is provided such that a user actuates the pusher 32 to cause a force to be exerted upon the wedge 30 to cause it to enter the jaws 22, again, all in a conventional manner. In the handpiece 10 depicted in the drawings, pusher 32 is a button, but may be any conventional design such as a lever or the like.

According to the invention, there is provided at least a dental handpiece (10) of the type having chucking mechanism to releasably hold a dental tool, the chuck mechanism having as components, a pusher(32), a wedge (30) and a set of jaws (22), **characterized in that**
(a) at least one of the chuck mechanism components is provided with a coating that provides both anti-friction and anti-corrosion properties in the presence of moisture; and in that
(b) said coating contains an amorphous component selected from the group consisting of graphite, chromium-nitrate and mixtures thereof.
Any of the other handpiece components, may also be so coated. The anti-friction coating will reduce the friction that exists between the physically contacting parts, thereby making use of the handpiece 10 easier for the user. An anti-corrosion coating will provide for a longer useful life of the handpiece 10 with reduced affects from use and sterilization-induced corrosion.

The coating employed provides both anti-friction and anti-corrosion properties, but it is within the scope of the invention to provide one coating that provides one, or two coatings with each providing a respective one of the desired properties.

Coatings contain amorphous components selected from the group consisting of graphite, chromium-nitrate, and mixtures thereof. One preferred graphite coating is Graphit-iC commercially available from IonBond Inc. of Madison Heights, MI. Such coatings may be applied by any conventional process, such as physical vapor deposition. Graphit-iC is known to form a diamond like carbon (DLC) coating with properties that include low friction and excellent corrosion resistance due to its amorphous structure. It has the capability of retaining its properties in high moisture applications due to the absence of hydrogen in the film.

It should be apparent therefore, that the present invention provides an advantage and an improvement over known dental handpieces. While in the foregoing, embodiments of the invention have been disclosed in considerable detail for purposes of illustration, it will be understood by those skilled in the art that many of these details may be varied without departing from the scope of the invention.

## Claims

1. A dental handpiece (10) of the type having chucking mechanism to releasably hold a dental tool, the chuck mechanism having as components, a pusher(32), a wedge (30) and a set of jaws (22), **characterized in that**
(a) at least one of the chuck mechanism components is provided with a coating that provides both anti-friction and anti-corrosion properties in the presence of moisture; and **in that**
(b) said coating contains an amorphous component selected from the group consisting of graphite, chromium-nitrate and mixtures thereof.

## Patentansprüche

1. Zahnärztliches Handstück (10) der Art, die einen Einspannmechanismus zum lösbaren Halten eines Dentalwerkzeugs aufweist, wobei der Einspannmechanismus als Komponenten einen Drücker (32), einen Keil (30) und eine Reihe von Klemmbacken (22) aufweist, **dadurch gekennzeichnet, dass**
(a) mindestens eine der Komponenten des Einspannmechanismus mit einer Beschichtung versehen ist, die an die Antireibungs- und Antikorrosionseigenschaften in Gegenwart von Feuchtigkeit verleiht; und dass
(b) die Beschichtung eine amorphe Komponente enthält, ausgewählt aus der Gruppe bestehend aus Graphit, Chromnitrat und Mischungen davon.

## Revendications

1. Pièce à main dentaire (10) du type ayant un mécanisme de serrage pour maintenir de façon libérable un outil dentaire, le mécanisme de serrage ayant, en tant que constituants, un poussoir (32), un coin (30) et un jeu de mors (22), **caractérisée en ce que**
(a) au moins l'un des constituants du mécanisme de serrage est pourvu d'un revêtement qui procure des propriétés à la fois antifriction et anticorrosion en présence d'humidité ; et **en ce que**
(b) ledit revêtement contient un constituant amorphe choisi dans le groupe constitué du graphite, du nitrate de chrome et de mélanges de ceux-ci.
